# EUROPEAN PATENT APPLICATION

(11) **EP 4 406 726 A1**
(43) Date of publication of application: **31.07.2024**
(21) Application number: 22872578.4
(22) Date of filing: 08.08.2022
(51) Int. Cl.: B29C 64/118, B33Y 10/00, B33Y 70/00, C08K 5/523, C08L 27/12, C08L 69/00, C08L 101/00

(54) **THERMOPLASTIC RESIN COMPOSITION, METHOD FOR PRODUCING SHAPED OBJECT, AND SHAPED OBJECT**

(30) Priority: 21.09.2021 JP 2021152967
(71) Applicant: Adeka Corporation, Tokyo 116-8554 (JP)
(72) Inventor: NAKAMURA, Tatsuhito, Tokyo 116-8554 (JP); TAKANE, Ryo, Tokyo 116-8554 (JP)
(74) Representative: Forstmeyer, Dietmar
(86) International application number: PCT/JP2022/030327
(87) International publication number: WO 2023/047822

(57) **Abstract**

The present invention provides a thermoplastic resin composition for fused deposition modeling, the composition containing: (A) a thermoplastic resin; and (B) a condensed phosphate ester compound represented by a general formula (1) below, wherein the condensed phosphate ester compound has a melting point of 150°C or less or is liquid at ambient temperature. The amount of the condensed phosphate ester compound (B) contained is 1 to 35 parts by mass per 100 parts by mass of the total amount of the thermoplastic resin (A) and the condensed phosphate ester compound (B). When the resin composition contains a plurality of compounds represented by the general formula (1) in which R¹¹, R¹², R¹³, R¹⁴, and R¹⁵ are the same, but r is different, having a melting point of 150°C or less or being liquid at ambient temperature encompasses a case where a mixture of the plurality of compounds has a melting point of 150°C or less or is liquid at ambient temperature. For definitions of the symbols used in the formulas (1), (2), (3), and (4), see the specification.

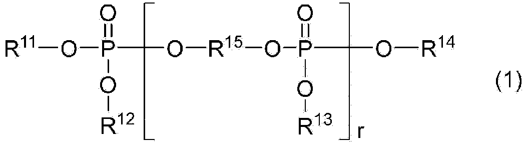

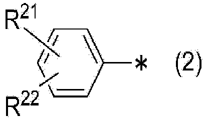

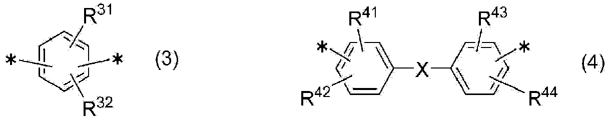

## Description

### Technical Field

The present invention relates to a thermoplastic resin composition for fused deposition modeling, a method for producing a modeled object by fused deposition modeling involving use of the thermoplastic resin composition, a modeled object obtained using the method, and use of a resin material for producing a filament material for fused deposition modeling.

### Background Art

Three-dimensional modeling (also referred to as "additive manufacturing" or "3D printing") technology can produce resin products or other products without using molds, and allows a high level of freedom in the shape of produced articles. Because of these advantages, this technology has been used in various fields in recent years. In particular, additive manufacturing apparatuses that use a fused deposition modeling (FDM) method are relatively inexpensive than those that use other methods, and therefore are widely used not only in industrial applications but also in home applications. The FDM method is a method including discharging a fused thermoplastic resin from a nozzle to deposit the thermoplastic resin on a layer-by-layer basis to thereby construct a three-dimensional article.

Conventionally, acrylonitrile-butadiene-styrene copolymer (ABS resin) and polylactic acid have been mainstream thermoplastic resins used as a material in the FDM method. However, these thermoplastic resins are flammable substances, and therefore are not suitable for applications that require a high level of safety such as use for aircraft components, automobile components, and home appliance components. To address this problem, for example, Patent Literature 1 proposes a method involving use of a polyetherimide resin, which is a flame retardant resin. However, for construct a three-dimensional article from polyetherimide using the FDM method, it is necessary to set the nozzle temperature to a temperature within a temperature range of 350 to 400°C, and this temperature range can be accepted by only some high-end modeling apparatuses. Also, use of a polyetherimide resin is disadvantageous in terms of production cost because it is more expensive than the commonly used materials such as ABS resin and polylactic acid.

As a means for solving the problem described above, a method is known in which a flame retardant is added to an inexpensive thermoplastic resin material to make it flame retardant. For example, Patent Literature 2 proposes a glass fiber composite material for 3D printing, and discloses that the glass fiber composite material contains waste plastics and triphenyl phosphate as the ingredients. Patent Literature 3 proposes a resin filament for forming a three-dimensional modeled article, the filament made of a resin composition containing an aromatic vinyl resin and a phosphate compound with a specific structure, and discloses that delamination is unlikely to occur in the modeled article formed of the filament.

### Citation List

### Patent Literatures

Patent Literature 1: U.S. Patent No. 10434705
Patent Literature 2: Chinese Patent Application Publication No. 106433177
Patent Literature 3: JP 2017-149038A

### Summary of Invention

### Technical Problem

However, Patent Literature 2 does not disclose forming a modeled article by three-dimensional modeling or the flame retardancy of a modeled article. As a result of studies conducted by the inventors of the present application, it has been found that, when FDM three-dimensional modeling is performed by using a thermoplastic resin material that contains triphenyl phosphate, which is a low-molecular compound, the triphenyl phosphate evaporates with fumes due to heat during modeling, and the resulting three-dimensional modeled object exhibits no flame retardancy. Patent Literature 3 does not disclose the flame retardancy of the composition, and also does not disclose or suggest that the melting point of phosphate ester affects interlayer adhesion during three-dimensional modeling.

Under the circumstances described above, there is a need for a thermoplastic resin composition for FDM that is excellent in terms of flame retardancy, modeling stability, and interlayer adhesion.

### Solution to Problem

The inventors of the present application have conducted further studies. As a result, they have found that when a three-dimensional modeled article is produced by the FDM method involving use of a flame retardant thermoplastic resin composition obtained by adding, to a thermoplastic resin, a condensed phosphate ester compound that has a specific structure and a melting point in a specific range as a flame retardant, the resulting three-dimensional modeled article has high flame retardancy, excellent modeling stability, and high interlayer adhesion. Thus, the present invention has been accomplished.

According to the present invention, there is provided a thermoplastic resin composition for fused deposition modeling, the resin composition containing:
(A) a thermoplastic resin; and
(B) a condensed phosphate ester compound represented by a general formula (1) given below, wherein the condensed phosphate ester compound has a melting point of 150°C or less or is liquid at ambient temperature,

wherein an amount of the condensed phosphate ester compound (B) contained is 1 to 35 parts by mass per 100 parts by mass of a total amount of the thermoplastic resin (A) and the condensed phosphate ester compound (B),
provided that when the resin composition contains a plurality of compounds represented by the general formula (1) in which R¹¹, R¹², R¹³, R¹⁴, and R¹⁵ are the same, but r is different, having a melting point of 150°C or less or being liquid at ambient temperature encompasses a case where a mixture of the plurality of compounds has a melting point of 150°C or less or is liquid at ambient temperature.

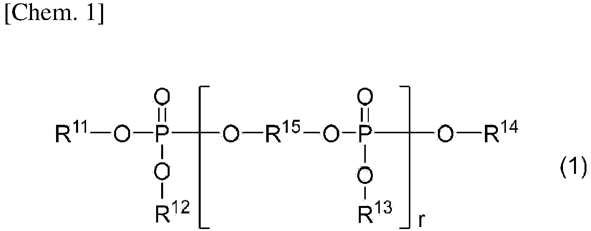

In the general formula (1), R¹¹, R¹², R¹³, and R¹⁴ may be the same or different, and each represent an alkyl group having 1 to 10 carbon atoms or an aromatic hydrocarbon group represented by a general formula (2) given below, R¹⁵ represents a divalent aromatic hydrocarbon group represented by a general formula (3) or (4) given below, and r represents a number from 1 to 30.

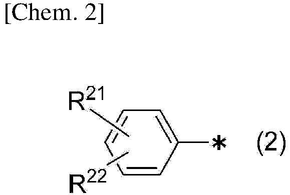

In the general formula (2), R²¹ and R²² each independently represent a hydrogen atom, a hydroxy group, or an alkyl group having 1 to 10 carbon atoms, and an asterisk (*) represents a bonding site.

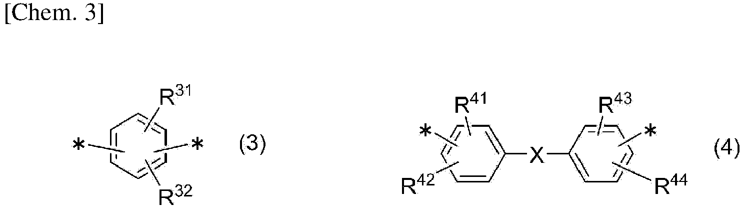

In the general formulas (3) and (4), R³¹, R³², R⁴¹, R⁴², R⁴³, and R⁴⁴ each independently represent a hydrogen atom, an alkyl group having 1 to 4 carbon atoms, an alkoxy group having 1 to 4 carbon atoms, a cycloalkyl group having 3 to 8 carbon atoms, an aryl group having 6 to 10 carbon atoms, a nitro group, a halogen atom, or a cyano group, X represents a direct bond, a divalent sulfur atom, a sulfonyl group, an alkylidene group having 1 to 5 carbon atoms, or an alkylene group having 1 to 5 carbon atoms, and an asterisk (*) represents a bonding site.

The thermoplastic resin composition of the present invention preferably further contains: (C) one or more fluorine-containing polymers in an amount of 0.03 to 5 parts by mass per 100 parts by mass of the thermoplastic resin (A).

The thermoplastic resin composition of the present invention preferably has a thread-like shape.

The thermoplastic resin composition of the present invention preferably has a thread-like shape with an average diameter of 1.55 to 1.95 mm.

In the thermoplastic resin composition of the present invention, the thermoplastic resin (A) preferably contains one or more condensed polymer compounds.

In the thermoplastic resin composition of the present invention, the thermoplastic resin (A) preferably contains a polycarbonate resin.

Also, according to the present invention, it is possible to provide a method for producing a modeled object from the thermoplastic resin composition described above by a three-dimensional modeling apparatus.

In the method of the present invention, the three-dimensional modeling apparatus preferably has a nozzle temperature of 300°C or less.

Also, according to the present invention, there is provided a modeled object obtained by the method described above.

Also, according to the present invention, there is provided use of a resin material for producing a filament material for fused deposition modeling, wherein the resin material contains: (A) a thermoplastic resin; and (B) a condensed phosphate ester compound represented by a general formula (1) given below, wherein the condensed phosphate ester compound has a melting point of 150°C or less or is liquid at ambient temperature; wherein a content of the condensed phosphate ester compound (B) is 1 to 35 parts by mass per 100 parts by mass of a total amount of the thermoplastic resin (A) and the condensed phosphate ester compound (B); provided that when the resin composition contains a plurality of compounds represented by the general formula (1) in which R¹¹, R¹², R¹³, R¹⁴, and R¹⁵ are the same, but r is different, having a melting point of 150°C or less or being liquid at ambient temperature encompasses a case where a mixture of the plurality of compounds has a melting point of 150°C or less or is liquid at ambient temperature.

### Advantageous Effects of the Invention

According to the present invention, there are provided a thermoplastic resin composition for fused deposition modeling that is excellent in terms of flame retardancy, modeling stability, and interlayer adhesion; a method for producing a modeled object from the thermoplastic resin composition by fused deposition modeling; and a modeled object obtained by the method.

### Description of Embodiment

Hereinafter, embodiments of the present invention will be described in detail.

Herein, the term "fused deposition modeling" (hereinafter also referred to as "FDM") refers to three-dimensional modeling by a fusion deposition method. The FDM method is one of three-dimensional modeling methods. In this method, a three-dimensional article is constructed by heating and melting a thermoplastic resin in the shape of a pellet, a thread, or others in a modeling apparatus, and then discharging the thermoplastic resin from a nozzle to deposit the thermoplastic resin on a layer-by-layer basis while cooling the layers to solidify.

The thermoplastic resin composition of the present invention is a thermoplastic resin composition for fused deposition modeling and contains a thermoplastic resin (A) and a condensed phosphate ester compound (B).

The thermoplastic resin (A) used in the present invention will be described. Hereinafter, the thermoplastic resin (A) may also be referred to as "component (A)".

Specific examples of the thermoplastic resin (A) used in the present invention include: polyolefin-based resins and copolymers thereof, such as α-olefin polymers such as polypropylene, high-density polyethylene, low-density polyethylene, linear low-density polyethylene, crosslinked polyethylene, ultra-high molecular weight polyethylene, polybutene-1, poly-3-methylpentene, and poly-4-methylpentene, and also, an ethylene-vinyl acetate copolymer, an ethylene-ethyl acrylate copolymer, and an ethylene-propylene copolymer; halogen-containing resins such as polyvinyl chloride, polyvinylidene chloride, chlorinated polyethylene, chlorinated polypropylene, polyvinylidene fluoride, chlorinated rubber, a vinyl chloride-vinyl acetate copolymer, a vinyl chloride-ethylene copolymer, a vinyl chloride-vinylidene chloride copolymer, a vinyl chloride-vinylidene chloride-vinyl acetate terpolymer, a vinyl chloride-acrylic acid ester copolymer, a vinyl chloride-maleic acid ester copolymer, and a vinyl chloride-cyclohexyl maleimide copolymer; petroleum resin, coumarone resin, polystyrene (PS), high-impact polystyrene (HIPS), polyvinyl acetate, acrylic resin, copolymers of styrene and/or α-methylstyrene with another monomer (for example, maleic anhydride, phenylmaleimide, methyl methacrylate, butadiene, or acrylonitrile), such as an acrylonitrile-styrene copolymer (AS resin), an acrylonitrile-butadiene-styrene copolymer (ABS resin), an acrylonitrile-chlorinated polyethylene-styrene copolymer (ACS resin), a styrene-butadiene-styrene copolymer (SBS resin), a heat-resistant ABS resin, a methylmethacrylate-butadiene styrene copolymer (MBS resin), and a methylmethacrylate-acrylonitrile-butadiene-styrene copolymer (MABS resin); polymethylmethacrylate, polyvinyl alcohol, polyvinyl formal, and polyvinyl butyral; aromatic polyester resins such as polyalkylene terephthalates such as polyethylene terephthalate, polybutylene terephthalate, polytetramethylene terephthalate, and polycyclohexane dimethylene terephthalate, and polyalkylene naphthalates such as polyethylene naphthalate and polybutylene naphthalate, and linear polyester resins such as polytetramethylene terephthalate; polyester resins such as degradable aliphatic polyester resins such as polyhydroxybutyrate, polycaprolactone, polybutylene succinate, polyethylene succinate, polylactic acid, polymalic acid, polyglycolic acid, polydioxane, and poly(2-oxetanone); polyamide resins such as polycaprolactam and polyhexamethylene adipamide; cellulose ester-based resins such as cellulose acetate, cellulose propionate, cellulose butyrate, cellulose acetate propionate, and cellulose acetate butyrate; polycarbonate resins such as a linear polycarbonate and a branched polycarbonate, a polycarbonate/ABS resin (a polymer alloy of polycarbonate and ABS resin), polyacetal resin, polyphenylene sulfide resin, polyurethane resin, cellulose-based resin, polyimide resin, polyether sulfone (PES) resin, polysulfone resin, polyphenylene ether resin, polyether ketone resin, polyether ether ketone resin, liquid crystal polymer, other thermoplastic resins, and blends thereof.

The thermoplastic resin (A) may be an elastomer such as an isoprene rubber, a butadiene rubber, an acrylonitrile butadiene copolymer rubber, a styrene butadiene copolymer rubber, a fluorine rubber, a silicone rubber, a polyolefin-based thermoplastic elastomer, a styrene-based thermoplastic elastomer, a polyester-based thermoplastic elastomer, a nitrile-based thermoplastic elastomer, a nylon-based thermoplastic elastomer, a vinyl chloride-based thermoplastic elastomer, a polyamide-based thermoplastic elastomer, or a polyurethane-based thermoplastic elastomer.

These resins that can be used as the thermoplastic resin (A) in the present invention may be used singly or in a combination of two or more, or they may be alloyed.

Also, the resins listed as examples of the thermoplastic resin (A) can be used irrespective of molecular weight, the degree of polymerization, density, softening point, the ratio of insoluble matter to solvent, the degree of stereoregularity, the presence or absence of a catalyst residue, the type(s) and mixing ratio of the monomer(s) used as the starting material, the type of polymerization catalyst (for example, a Ziegler catalyst, or a metallocene catalyst), etc.

Out of the resins listed as examples of the thermoplastic resin (A), the thermoplastic resin (A) preferably contains one or more selected from condensed thermoplastic resins (condensed polymer compounds), and more preferably contains a polycarbonate resin, and also preferably contains a polyphenylene ether resin, in view of remarkably exhibiting the advantageous effects of the present invention,.

The term "condensed thermoplastic resin" refers to a thermoplastic resin obtained by condensation polymerization. Condensed thermoplastic resins have a large strength and are unlikely to shrink, and thus they are suitable for use as thermoplastic resins in FDM.

Examples of the condensed thermoplastic resins include a polyester resin, a polyamide resin, and a polycarbonate resin. Other examples of the condensed thermoplastic resins include elastomers such as a polyester-based thermoplastic elastomer, a polyamide-based thermoplastic elastomer, and a polyurethane-based thermoplastic elastomer. In the present invention, these condensed thermoplastic resins may be used singly or in a combination of two or more thereof. The condensed thermoplastic resins may also be alloyed.

Examples of the polyester resin include various types of aromatic polyester resins, linear polyester resins, and degradable aliphatic polyesters listed above. Out of these, preferred are, for example, polyalkylene terephthalates such as polyethylene terephthalate, polybutylene terephthalate, polytetramethylene terephthalate, and polycyclohexane dimethylene terephthalate; polyalkylene naphthalates such as polyethylene naphthalate and polybutylene naphthalate; and degradable aliphatic polyesters such as polyhydroxybutyrate, polycaprolactone, polybutylene succinate, polyethylene succinate, polylactic acid, polymalic acid, polyglycolic acid, polydioxane, and poly(2-oxetanone).

Examples of the polyamide resin include: aliphatic polyamides such as polyamide 410, polyamide 6, polyamide 66, polyamide 666, polyamide 610, polyamide 612, polyamide 11, and polyamide 12; and semi-aromatic polyamides such as polyamide 4T, polyamide 6T, polyamide 9T, and polyamide 10T.

The polycarbonate resin refers to a resin that has a carbonate bond, and can be obtained, for example, by a polymerization reaction between a divalent hydroxyaromatic compound and a carbonate precursor.

Examples of the divalent hydroxyaromatic compound include dihydroxybenzenes such as resorcin and hydroquinone; bishydroxyaryls such as 4,4'-dihydroxydiphenyl; bis(hydroxyaryl)alkanes such as bis(4-hydroxyphenyl)methane, 1,1-bis(4-hydroxyphenyl)ethane, 1,2-bis(4-hydroxyphenoxy)ethane, and 2,2-bis(4-hydroxyphenyl)propane; dihydroxy aryl ketones such as bis(4-hydroxyphenyl)ketone and bis(4-hydroxy-3-methylphenyl)ketone; dihydroxy aryl ethers such as 4,4'-dihydroxydiphenyl ether, 4,4'-dihydroxy-3,3'-dimethylphenyl ether, and 4,4'-dihydroxy-2,5-dihydroxydiphenyl ether; dihydroxy aryl sulfur compounds such as 4,4'-thiodiphenol, bis(4-hydroxyphenyl)sulfide, 4,4' -dihydroxy-3,3' -dimethyldiphenyl sulfide, 4,4' -dihydroxy-3,3' -dimethyldiphenyl sulfoxide, 4,4'-dihydroxy-3,3'-dimethyldiphenyl sulfoxide, 2,2-bis(4-hydroxyphenyl)sulfone, 4,4'-dihydroxydiphenyl sulfone, and 4,4'-dihydroxy-3,3'-dimethyldiphenyl sulfone; and phenolphthalein. These may be used singly or in a combination of two or more thereof, and may be mixed with a polyvalent hydroxyaromatic compound having three or more hydroxy groups.

Specific preferred examples of the carbonate precursor include phosgene, carbonic acid diester, diphenyl carbonate, dihaloformate of divalent phenol, and mixtures thereof.

The polyphenylene ether resins may be used singly or alloyed. Examples of resins that can be alloyed with the polyphenylene ether include a styrene-based resin, polyamide, polypropylene, polyacetal, and polyphenylene sulfide. Out of these, the styrene-based resin is preferably used for alloying with the polyphenylene ether resin because such an alloyed resin has excellent compatibility with the condensed phosphate ester compound.

Specific examples of the styrene-based resin include: resins such as polystyrene (PS), a styrene-butadiene-styrene copolymer (SBS resin), a hydrogenated styrene-butadiene-styrene copolymer (hydrogenated SBS), a hydrogenated styrene-isoprene-styrene copolymer (SEPS), high-impact polystyrene (HIPS), an acrylonitrile-styrene copolymer (AS resin), an acrylonitrile-butadiene-styrene copolymer (ABS resin), a methylmethacrylate-butadiene-styrene copolymer (MBS resin), a methylmethacrylate-acrylonitrile-butadiene-styrene copolymer (MABS resin), a methylmethacrylate-acrylonitrile styrene copolymer (MAS resin), an acrylonitrile-acrylic rubber-styrene copolymer (AAS resin), an acrylonitrile-styrene-acrylic rubber copolymer (ASA resin), an acrylonitrile-thylenepropylene-based rubber-styrene copolymer (AES resin), and a styrene-IPN type rubber copolymer; and mixtures thereof. It is also possible to use a resin that has stereoregularity such as syndiotactic polystyrene. Out of these styrene-based resins, polystyrene and high-impact polystyrene are preferred.

On the other hand, a non-condensed polymer compound (non-condensed thermoplastic resin) may also be used as the thermoplastic resin. The non-condensed a polymer compound may be a resin that basically does not have an amide bond, an ester bond, a urethane bond, a carbonate bond, or the like in its main backbone, and may be such a resin out of those listed above. Specific examples include: polyolefin-based resins and copolymers thereof, such as α-olefin polymers such as polypropylene, high-density polyethylene, low-density polyethylene, linear low-density polyethylene, crosslinked polyethylene, ultra-high molecular weight polyethylene, polybutene-1, poly-3-methylpentene, and poly-4-methylpentene, and also, an ethylene-vinyl acetate copolymer, an ethylene-ethyl acrylate copolymer, and an ethylene-propylene copolymer; halogen-containing resins such as polyvinyl chloride, polyvinylidene chloride, chlorinated polyethylene, chlorinated polypropylene, polyvinylidene fluoride, chlorinated rubber, a vinyl chloride-vinyl acetate copolymer, a vinyl chloride-ethylene copolymer, a vinyl chloride-vinylidene chloride copolymer, a vinyl chloride-vinylidene chloride-vinyl acetate terpolymer, a vinyl chloride-acrylic acid ester copolymer, a vinyl chloride-maleic acid ester copolymer, and a vinyl chloride-cyclohexyl maleimide copolymer; copolymers of petroleum resin, coumarone resin, polystyrene (PS), high-impact polystyrene (HIPS), polyvinyl acetate, acrylic resin, copolymers of styrene and/or α-methylstyrene with another monomer (for example, maleic anhydride, phenylmaleimide, methyl methacrylate, butadiene, or acrylonitrile), such as AS resin, ABS resin, ACS resin, SBS resin, MBS resin, MABS resin, and heat-resistant ABS resin; and elastomers such as an isoprene rubber, a butadiene rubber, an acrylonitrile butadiene copolymer rubber, a styrene butadiene copolymer rubber, a fluorine rubber, a silicone rubber, a polyolefin-based thermoplastic elastomer, a styrene-based thermoplastic elastomer, and a vinyl chloride-based thermoplastic elastomer. Out of these, polystyrene, HIPS, AS resin, ABS resin, MBS resin, MABS resin, heat-resistant ABS resin, and a styrene-based thermoplastic elastomer are preferred in view of modeling stability, in particular, small shrinkage and small warpage, during FDM modeling.

In view of mechanics properties, the amount of the thermoplastic resin is preferably 60 mass% or more, and more preferably 65 mass% or more based on the thermoplastic resin composition. In view of increasing the amount of the condensed phosphate ester compound represented by the general formula (1) to enhance flame retardancy, the amount of the thermoplastic resin is preferably 95 mass% or less, and more preferably 93 mass% or less based on the thermoplastic resin composition. From the above-described viewpoints, the amount of the thermoplastic resin is preferably, for example, 60 mass% or more and 95 mass% or less, and more preferably 65 mass% or more and 93 mass% or less, in view of the balance between flame retardancy, modeling stability, and interlayer adhesion.

Also, in the case where the thermoplastic resin composition contains a condensed thermoplastic resin such as a polycarbonate resin, the amount of the condensed thermoplastic resin is preferably 50 mass% or more, more preferably 60 mass% or more, and even more preferably 65 mass% or more based on the thermoplastic resin composition, in view of easily obtaining the above-described advantageous effects brought about by using the condensed thermoplastic resin. In view of increasing the amount of the condensed phosphate ester compound represented by the general formula (1) to enhance flame retardancy, the amount of the condensed thermoplastic resin is preferably 95 mass% or less, and more preferably 93 mass% or less based on the thermoplastic resin composition. From the above-described viewpoints, the amount of the condensed thermoplastic resin is preferably, for example, 50 mass% or more and 95 mass% or less, and more preferably 60 mass% or more and 95 mass% or less, and even more preferably 65 mass% or more and 93 mass% or less based on the thermoplastic resin composition, in view of the balance between flame retardancy, modeling stability, and interlayer adhesion.

Also, in the case where the thermoplastic resin composition contains a condensed thermoplastic resin such as a polycarbonate resin, the amount of the condensed thermoplastic resin is preferably 1 mass% or more, and more preferably 50 mass% or more based on the thermoplastic resin. The amount of the condensed thermoplastic resin is 100 mass% or less based on the thermoplastic resin, and in view of further enhancing the balance between flame retardancy, modeling stability, and interlayer adhesion, however, the amount of the condensed thermoplastic resin is preferably 95 mass% or less. From this viewpoint, the amount of the condensed thermoplastic resin is preferably, for example, 1 mass% or more and 100 mass% or less, and more preferably 50 mass% or more and 95 mass% or less based on the thermoplastic resin, in view of the balance between flame retardancy, modeling stability, and interlayer adhesion.

In the case where the thermoplastic resin contains a non-condensed thermoplastic resin, the amount of the non-condensed thermoplastic resin is preferably, but is not particularly limited to, 1 mass% or more, and more preferably 3 mass% or more based on the thermoplastic resin composition, in view of fabricability and impact resistance. In view of flame retardancy, the amount of the non-condensed thermoplastic resin is preferably 50 mass% or less, and more preferably 30 mass% or less based on the thermoplastic resin composition. From the above-described viewpoints, the amount of the non-condensed thermoplastic resin is preferably, for example, 1 mass% or more and 50 mass% or less, and more preferably 3 mass% or more and 30 mass% or less based on the thermoplastic resin composition, in view of the balance between flame retardancy, modeling stability, and interlayer adhesion.

Also, in the case where the thermoplastic resin contains a non-condensed thermoplastic resin, the amount of the non-condensed thermoplastic resin is preferably 1 mass% or more, and more preferably 5 mass% or more based on the thermoplastic resin, in view of fabricability and impact resistance. In view of flame retardancy, the amount of the non-condensed thermoplastic resin is preferably 50 mass% or less, and more preferably 40 mass% or less based on the thermoplastic resin. From the above-described viewpoints, the amount of the non-condensed thermoplastic resin is preferably, for example, 1 mass% or more and 50 mass% or less, and more preferably 5 mass% or more and 40 mass% or less based on the thermoplastic resin, in view of the balance between flame retardancy, modeling stability, and interlayer adhesion.

In the case where the thermoplastic resin composition of the present invention contains an aromatic vinyl resin, the aromatic vinyl resin may be selected from the group consisting of PS resin, HIPS resin, MS resin, ABS resin, AS resin, AES resin, ASA resin, MBS resin, MABS resin, MAS resin, and mixtures thereof, and may contain a rubber component in an amount of 5 to 15 weight% based on the weight of the aromatic vinyl resin, and the amount of such an aromatic vinyl resin may be less than 85 mass% based on the resin composition.

The condensed phosphate ester compound (B) used in the present invention will be described.

The condensed phosphate ester compound (B) used in the present invention is represented by a general formula (1) given below.

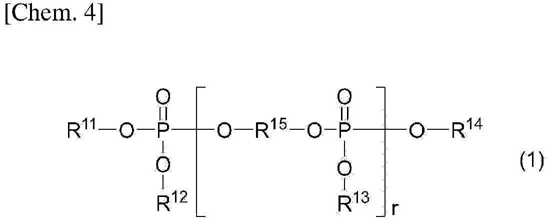

In the general formula (1), R¹¹, R¹², R¹³, and R¹⁴ may be the same or different, and each represent an alkyl group having 1 to 10 carbon atoms or an aromatic hydrocarbon group represented by a general formula (2) given below. R¹⁵ represents a divalent aromatic hydrocarbon group represented by a general formula (3) or (4) given below, and r represents a number from 1 to 30.

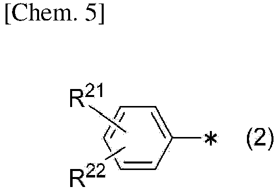

In the general formula (2), R²¹ and R²² each independently represent a hydrogen atom, a hydroxy group, or an alkyl group having 1 to 10 carbon atoms, and an asterisk (*) represents a bonding site.

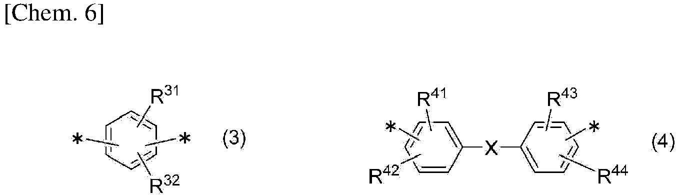

In the general formulas (3) and (4), R³¹, R³², R⁴¹, R⁴², R⁴³, and R⁴⁴ each independently represent a hydrogen atom, an alkyl group having 1 to 4 carbon atoms, an alkoxy group having 1 to 4 carbon atoms, a cycloalkyl group having 3 to 8 carbon atoms, an aryl group having 6 to 10 carbon atoms, a nitro group, a halogen atom, or a cyano group, X represents a direct bond, a divalent sulfur atom, a sulfonyl group, an alkylidene group having 1 to 5 carbon atoms, or an alkylene group having 1 to 5 carbon atoms, and an asterisk (*) represents a bonding site.

Examples of the alkyl group having 1 to 10 carbon atoms that may be represented by R¹¹, R¹², R¹³, and R¹⁴ in the general formula (1) include a methyl group, an ethyl group, a propyl group, an isopropyl group, a butyl group, a sec-butyl group, a tert-butyl group, a pentyl group, a tert-pentyl group, a hexyl group, a heptyl group, an octyl group, an isooctyl group, a tert-octyl group, a 2-ethylhexyl group, a nonyl group, an isononyl group, a decyl group, an isodecyl group, and a 2-propylheptyl group.

In the general formula (1), R¹¹, R¹², R¹³, and R¹⁴ each preferably represent an aromatic hydrocarbon group represented by the general formula (2) in view of flame retardancy.

In the general formula (1), r represents a number from 1 to 30. When r is 1 or more, a three-dimensional modeled article produced from the thermoplastic resin composition of the present invention tends to have favorable interlayer adhesion and favorable deposition modeling stability. For the upper limit, r is preferably 10 or less, and more preferably 7 or less, whereby the condensed phosphate ester compound (B) is easy to handle.

The condensed phosphate ester compound (B) may be a mixture of a plurality of compounds represented by the general formula (1) in which r is different but the other variables (R¹¹, R¹², R¹³, R¹⁴, and R¹⁵) are the same.

Examples of the alkyl group having 1 to 10 carbon atoms that may be represented by R²¹ and R²² in the general formula (2) include those listed as examples of the alkyl group having 1 to 10 carbon atoms that may be represented by R¹¹, R¹², R¹³, and R¹⁴ in the general formula (1).

In the general formula (2), R²¹ and R²² each preferably represent a hydrogen atom or a methyl group, and more preferably a hydrogen atom.

Specific examples of the aromatic hydrocarbon group represented by the general formula (2) include a phenyl group, a tolyl group, a xylyl group, a 2,6-xylyl group, a 2,4,6-trimethylphenyl group, a 2-tert-butylphenyl group, a 4-tert-butylphenyl group, a 2,4-di-tert-butylphenyl group, a 2,6-di-tert-butyl-4-methylphenyl group, and a nonyl phenyl group. The aromatic hydrocarbon group represented by the general formula (2) is preferably a phenyl group, a tolyl group, a xylyl group, or a 2,6-xylyl group, more preferably a phenyl group or a 2,6-xylyl group, and even more preferably a phenyl group, whereby the condensed phosphate ester compound (B) is easy to handle and has the improved storage stability.

Examples of the alkyl group having 1 to 4 carbon atoms that may be represented by R³¹, R³², R⁴¹, R⁴², R⁴³, and R⁴⁴ in the general formulas (3) and (4) include groups having 1 to 4 carbon atoms out of those listed as examples of the alkyl group having 1 to 10 carbon atoms that may be represented by R¹¹, R¹², R¹³, and R¹⁴ in the general formula (1).

Examples of the alkoxy group having 1 to 4 carbon atoms that may be represented by R³¹, R³², R⁴¹, R⁴², R⁴³, and R⁴⁴ in the general formulas (3) and (4) include alkoxy groups corresponding to the above-listed examples of the alkyl group having 1 to 4 carbon atoms.

Examples of the cycloalkyl group having 3 to 8 carbon atoms that may be represented by R³¹, R³², R⁴¹, R⁴², R⁴³, and R⁴⁴ in the general formulas (3) and (4) include cycloalkyl groups corresponding to alkyl groups having 3 to 8 carbon atoms out of the above-listed examples of the alkyl group having 1 to 10 carbon atoms that may be represented by R¹¹, R¹², R¹³, and R¹⁴ in the general formula (1). Specific examples include cyclopropyl, cyclopentyl, cyclohexyl, and cycloheptyl, optionally substituted with an alkyl group.

Examples of the aryl group having 6 to 10 carbon atoms that may be represented by R³¹, R³², R⁴¹, R⁴², R⁴³, or R⁴⁴ in the general formulas (3) and (4) include a phenyl group, a tolyl group, a xylyl group, a 2,4,6-trimethylphenyl group, a 2-tert-butylphenyl group, a 4-tert-butylphenyl group, a naphthyl group, an azulenyl group, an indenyl group, an indanyl group, and a tetralinyl group.

Examples of the alkylidene group having 1 to 5 carbon atoms that may be represented by X in the general formula (4) include ethylidene, propylidene, isopropylidene, butylidene, and isobutylidene. Examples of the alkylene group having 1 to 5 carbon atoms include a methylene group, an ethylene group, a propylene group, a butylene group, an isobutylene group, and a pentylene group.

In the general formula (4), X preferably represents a direct bond, an alkylidene group having 1 to 5 carbon atoms, or an alkylene group having 1 to 5 carbon atoms in view of thermal stability, ease of adjustment of the melting point, and availability of the starting material.

Specific examples of the divalent aromatic hydrocarbon group represented by the general formula (3) include a 1,4-phenylene group, and a 1,3-phenylene group.

Specific examples of the divalent aromatic hydrocarbon group represented by the general formula (4) include a 4,4'-biphenylene group, a 4,4'-isopropylidenediphenylene group, a 4,4'-thiodiphenylene group, and a 4,4'-sulfonyldiphenylene group.

The melting point of the condensed phosphate ester compound (B) is 150°C or less, preferably 125°C or less, and more preferably 110°C or less.

Herein, the condensed phosphate ester compound (B) may be liquid at ambient temperature.

Hereinafter, a condensed phosphate ester compound represented by the general formula (1) that has a melting point of 150°C or less or is liquid at ambient temperature may be referred to as "component (B)". Examples of component (B) include: (1) a compound represented by the general formula (1) that has a melting point of 150°C or less as measured alone; (2) a plurality of condensed phosphate ester compounds represented by the general formula (1), wherein R¹¹, R¹², R¹³, R¹⁴, and R¹⁵ are the same, but r is different, a mixture of the plurality of the compounds having a melting point of 150°C or less, preferably 125°C or less, and more preferably 110°C or less; (3) a compound represented by the general formula (1) that is liquid at ambient temperature; and (4) a mixture composed of a plurality of compounds represented by the general formula (1), wherein R¹¹, R¹², R¹³, R¹⁴, and R¹⁵ are the same, but r is different, the mixture being liquid at ambient temperature. When the condensed phosphate ester compound (B) used is liquid at ambient temperature, a three-dimensional modeled article produced from the thermoplastic resin composition of the present invention has favorable interlayer adhesion and favorable deposition modeling stability. The ambient temperature may be 25°C.

The melting point in the present invention is measured by the following method. Here, in the case where the resin composition contains a plurality of compounds represented by the formula (1), the melting point means the values of the melting points of the plurality of compounds as measured for each of the compounds. However, in the case where the resin composition contains a plurality of compounds represented by the formula (1), wherein only r is different and the other variables are the same, the melting point of the plurality of the compounds represented by the formula (1) means the value of the melting point as measured for a mixture of the plurality of the compounds.

### < Method for Measuring Melting Point>

Melting point is measured using a thermogravimetry-differential thermal analyzer. A sample weighing 10 ± 0.5 mg is placed in an aluminum pan. The sample is heated from 25°C to 450°C at a rate of 10°C/min in the atmosphere, and the top of the melting peak is taken as the melting point.

Specific examples of the condensed phosphate ester compound (B) include compounds Nos. 1 to 5 below. In each of compounds Nos. 1 to 5, r represents a number from 1 to 30.

The expression "being liquid at ambient temperature" means being liquid at 25°C. The expression "being liquid" means having a viscosity that can be measured using a B type viscometer. In view of ease of handling, the condensed phosphate ester compound (B) preferably has a viscosity of 150,000 mPa•s or less, more preferably 100,000 mPa•s or less, even more preferably 80,000 mPa•s or less, and yet even more preferably 60,000 mPa•s or less, as measured using a B type viscometer (25°C). It is also preferable that the condensed phosphate ester compound (B) has no turbidity or no precipitation of crystals or solids.

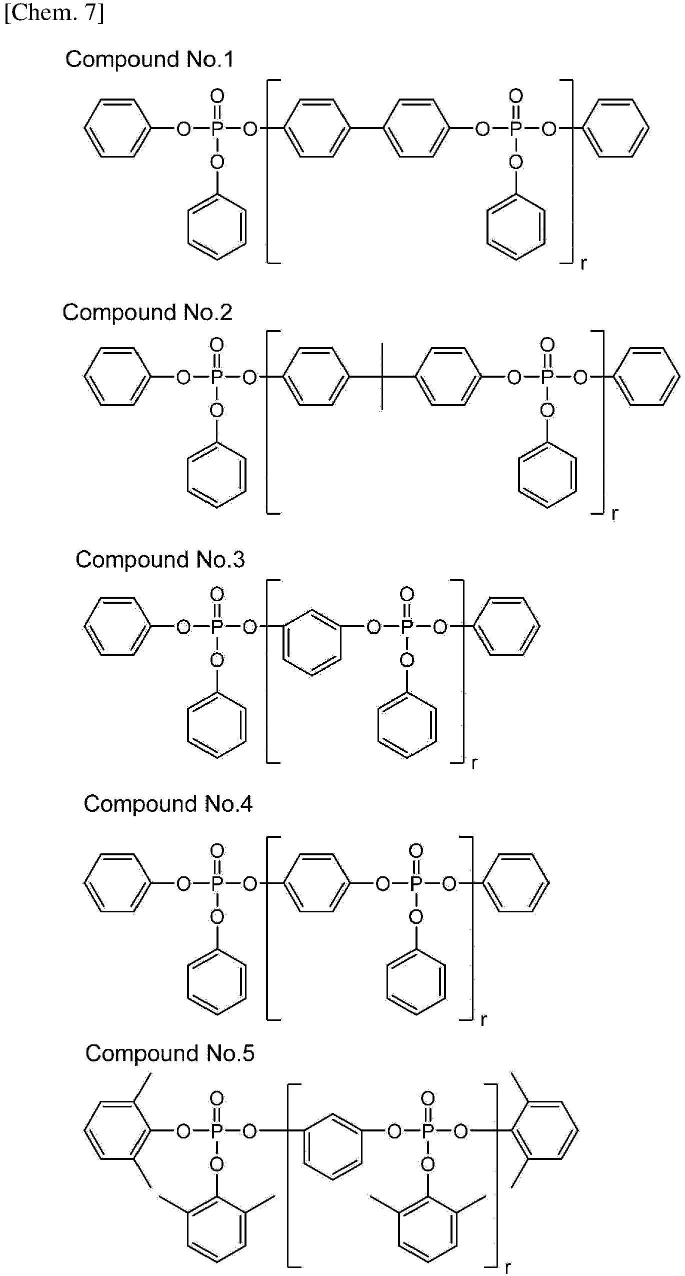

These compounds may be used singly or in a combination of two or more.

In view of interlayer adhesion and deposition modeling stability, the condensed phosphate ester compound (B) is preferably one or more of compounds Nos. 1, 2, 3, and 5 shown above. Also, in view of flame retardancy, the condensed phosphate ester compound (B) is more preferably one or more of compounds Nos. 1 and 2.

For the lower limit, the content of component (B) in the thermoplastic resin composition of the present invention is 1 part by mass or more per 100 parts by mass of the total amount of component (A) and component (B). In view of flame retardancy, the content of component (B) in the thermoplastic resin composition is preferably 7 parts by mass or more, more preferably 10 parts by mass or more, and even more preferably 12 parts by mass or more. On the other hand, for the upper limit, the content of component (B) is 35 parts by mass or less per 100 parts by mass of the total amount of component (A) and component (B). In view of interlayer adhesion and deposition modeling stability, the content of component (B) is preferably 30 parts by mass or less, more preferably 25 parts by mass or less, and even more preferably 20 parts by mass or less.

There is no particular limitation on the method for producing the condensed phosphate ester compound (B) of the present invention. For example, compound No. 1 can be produced by reacting 4,4'-dihydroxybiphenyl, phenol, and phosphorus oxychloride under the presence of a catalyst such as magnesium chloride to dehydrochlorinate.

The thermoplastic resin composition of the present invention may contain an additional component other than the thermoplastic resin (A) or the condensed phosphate ester compound (B) as long as the advantageous effects of the present invention are not impaired. As the additional component, it is possible to use any of additives that will be described later as examples of a component that can be added to the thermoplastic resin composition of the present invention.

In order to suppress flame dripping during combustion, the thermoplastic resin composition of the present invention preferably contains: (C) one or more fluorine-containing polymers.

Examples of the one or more fluorine-containing polymers (C) include polytetrafluoroethylene, polyhexafluoropropylene, a tetrafluoroethylene/hexafluoro propylene copolymer, a tetrafluoroethylene/ethylene copolymer, polyvinylidene fluoride, and polychlorotrifluoro ethylene. Out of these, it is preferable to use polytetrafluoroethylene in view of anti-dripping performance.

In the case where the thermoplastic resin composition contains one or more fluorine-containing polymers (C), the amount of the one or more fluorine-containing polymers (C) is preferably 0.03 to 5 parts by mass, more preferably 0.05 to 3 parts by mass, and even more preferably 0.1 to 1 part by mass, per 100 parts by mass of the thermoplastic resin (A). When the amount of the one or more fluorine-containing polymers (C) is 0.03 parts by mass or more, a sufficient anti-dripping effect can be obtained. When the amount of the one or more fluorine-containing polymers (C) is 5 parts by mass or less, impairment of resin characteristics is likely to be prevented.

Also, it is also preferable that the thermoplastic resin composition of the present invention should be stabilized by incorporating thereinto a phenol-based antioxidant, a phosphorus-based antioxidant, a thioether-based antioxidant, a UV absorbing agent, a hindered amine light stabilizer, or the like, if needed.

Examples of the phenol-based antioxidant include: 2,6-di-tert-butyl-p-cresol, 2,6-diphenyl-4-octadecyloxy phenol, distearyl(3,5-di-tert-butyl-4-hydroxybenzyl)phosphonate, 1,6-hexamethylene bis[(3,5-di-tert-butyl-4-hydroxyphenyl)propionic acid amide], 4,4'-thiobis(6-tert-butyl-m-cresol), 2,2'-methylene bis(4-methyl-6-tert-butylphenol), 2,2'-methylene bis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, pentaerythritol tetrakis [3 -(3,5-di-tert-butyl-4-hydroxyphenyl)propionate], thiodiethylene glycol bis [(3,5-di-tert-butyl-4-hydroxyphenyl)propionate], 1,6-hexamethylene bis[(3,5-di-tert-butyl-4-hydroxyphenyl)propionate], bis [3,3 -bis(4-hydroxy-3 -tert-butylphenyl)butyric acid] glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy}ethyl]-2,4 ,8,10-tetraoxaspiro[5,5]undecan, and triethyleneglycolbis[(3-tert-butyl-4-hydroxy-5-methylphenyl)propionate]. The amount of the phenol-based antioxidant used is preferably 0.001 to 10 parts by mass, and more preferably 0.05 to 5 parts by mass, per 100 parts by mass of the thermoplastic resin (A).

Examples of the phosphorus-based antioxidant include tris(nonylphenyl)phosphite, tris[2-tert-butyl-4-(3-tert-butyl-4-hydroxy-5-methylphenylthio)-5-methylphenyl]phosphit e, tridecyl phosphite, octyl diphenyl phosphite, didecyl monophenyl phosphite, bis(tridecyl)pentaerythritol diphosphite, bis(nonyl phenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetrakis(tridecyl)isopropylidenediphenol diphosphite, tetrakis(tridecyl)-4,4'-n-butylidene bis(2-tert-butyl-5-methylphenol)diphosphite, hexakis(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa- 10-phosphaphenanthrene- 10-oxide, 2,2' -methylene bis(4,6-tert-butylphenyl)-2-ethylhexylphosphite, 2,2' -methylene bis(4,6-tert-butylphenyl)-octadecylphosphite, 2,2'-ethylidenebis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)ami ne, a phosphite of 2-ethyl-2-butylpropylene glycol and 2,4,6-tri-tert-butylphenol. The amount of the phosphorus-based antioxidant used is preferably 0.001 to 10 parts by mass, and more preferably 0.05 to 5 parts by mass, per 100 parts by mass of the thermoplastic resin (A).

Examples of the thioether-based antioxidant include: dialkyl thiodipropionates such as dilauryl thiodipropionate, dimyrstyl thiodipropionate, and distearyl thiodipropionate; and pentaerythritoltetrakis(β-alkyl mercaptopropionates). The amount of the thioether-based antioxidant used is preferably 0.001 to 10 parts by mass, and more preferably 0.05 to 5 parts by mass, per 100 parts by mass of the thermoplastic resin (A).

Examples of the UV absorbing agent include: 2-hydroxybenzophenones such as 2,4-dihydroxybenzophenone, 2-hydroxy-4-methoxy benzophenone, 2-hydroxy-4-octoxybenzophenone, and 5,5'-methylene bis(2-hydroxy-4-methoxybenzophenone); 2-(2'-hydroxyphenyl)benzotriazoles such as 2-(2'-hydroxy-5' -methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5' -tert-octylphenyl)benzotriazole, 2-(2'-hydroxy-3',5'-dicumylphenyl)benzotriazole, 2,2'-methylene bis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyl oxanilide; cyanoacrylates such as ethyl-α-cyano-β, β-diphenyl acrylate, and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. The amount of the UV absorbing agent used is preferably 0.001 to 30 parts by mass, and more preferably 0.01 to 10 parts by mass, per 100 parts by mass of the thermoplastic resin (A).

Examples of the hindered amine light stabilizer include 2,2,6,6-tetramethyl-4-piperidylstearate, 1,2,2,6,6-pentamethyl-4-piperidylstearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)•bis(tridecyl)-1,2,3,4-butanetetracarboxylate, bis(1,2,2,6,6-pentamethyl-4-piperidyl)•bis(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)maro nate, 1-(2-hydroxyethyl)-2,2,6,6-tetramethyl-4-piperidinol/diethyl succinate polycondensate, 1,6-bis(2,2,6,6-tetramethyl-4-piperidyl amino)hexane/2,4-dichloro-6-morpholino-s-triazine polycondensate, 1,6-bis(2,2,6,6-tetramethyl-4-piperidyl amino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazin-6-yl ]-1,5, 8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8-12-tetraazadodecane, 1,6,11-tris[2,4-bis(N-butyl-N-(2,2,6,6-tetramethyl-4-piperidyl)amino)-s-triazin-6-yl]amin oundecane , 1,6,11-tris[2,4-bis(N-butyl-N-(1,2,2,6,6-pentamethyl-4-piperidyl)amino)-s-triazin-6-yl]a minoundecane, bis(2,2,6,6-tetramethyl-1-octyloxy-4-piperidyl)decanedioate, bis(2,2,6,6-tetramethyl-1-undecyloxopiperidin-4-yl)carbonate, and TINUVIN NOR 371 available from BASF Ltd. The amount of the hindered amine light stabilizer used is preferably 0.001 to 30 parts by mass, and more preferably 0.01 to 10 parts by mass, per 100 parts by mass of the thermoplastic resin (A).

The thermoplastic resin composition of the present invention may contain a filler as an optional component as long as the advantageous effects of the present invention are not remarkably impaired.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, carbon fiber, clay, dolomite, silica, alumina, potassium titanate whisker, wollastonite, fibrous magnesium oxysulfate, and hydrotalcite. The particle size (the fiber diameter and the fiber length and the aspect ratio in the case where the filler is fibrous) can be selected as appropriate. These fillers may be used singly or in a combination of two or more thereof. Also, the filler used may be a surface-treated filler, if necessary. In the case where the filler is used, the amount of the filler used is preferably 1 to 50 parts by mass, more preferably 3 to 45 parts by mass, and even more preferably 5 to 43 parts by mass, per 100 parts by mass of the thermoplastic resin (A), in view of the discharge stability of the resin composition from a FDM printer nozzle and maintaining the interlayer adhesion strength of the resulting molded article.

The thermoplastic resin composition of the present invention may further contain, as optional components, additives that are usually used for a synthetic resin, as long as the advantageous effects of the present invention are not impaired, and examples thereof include a crosslinking agent, an antistatic agent, an anti-fog agent, an anti-plate-out agent, a surface treatment agent, a plasticizer, a lubricant, a reinforcing agent, a flame retardant, a fluorescent agent, an antifungal agent, a bactericidal agent, a foaming agent, a metal deactivator, a mold release agent, a pigment, silicone oil, and a silane coupling agent.

The thermoplastic resin composition of the present invention can be obtained by mixing component (A) and component (B). Any of the additives listed above may be mixed as appropriate. The additive may be mixed in advance with component (A) or component (B), mixed with component (A) and component (B) when component (A) and component (B) are mixed, or mixed with a mixture of component (A) and component (B).

There is no particular limitation on the method for mixing the components, and any known method can be used. Examples include: a method in which the components are mixed using a mixer such as a tumbler mixer, a henschel mixer, a ribbon blender, a V-type mixer, a W-type mixer, a super mixer, or a nauta mixer; a method in which the components are melt kneaded using an extruder or the like; a method in which the components are mixed together with a solvent and subjected to solution casting; and the like. In the case where component (B) is liquid at ambient temperature, it is preferable, in view of handling, to obtain a resin composition that is solid at ambient temperature by mixing component (A) and component (B) together by, for example, the method in which the components are melt kneaded using an extruder or the like.

There is no particular limitation on the shape of the thermoplastic resin composition of the present invention. The thermoplastic resin composition may be in the shape of a thread, a pellet, a powder, a granule, or a flake. In view of handling, the thermoplastic resin composition is preferably in the shape of a thread, a pellet, or a granule.

The thermoplastic resin composition of the present invention preferably has a thread-like shape. When the thermoplastic resin composition has a thread-like shape, the thermoplastic resin composition can be suitably used as a filament material used in a commercially available FDM three-dimensional modeling apparatus. When the thermoplastic resin composition of the present invention has a thread-like shape, the length is preferably 10 cm or more, and more preferably 200 cm or more.

When the thermoplastic resin composition of the present invention has a thread-like shape, the average diameter is preferably 1.55 to 1.95 mm, and more preferably 1.65 to 1.85 mm. When the thermoplastic resin composition has an average diameter within the above-described range, the thermoplastic resin composition can be suitably used as a filament material used in a commercially available FDM three-dimensional modeling apparatus.

The average diameter can be measured in, for example, a physical manner using a digital caliper, or the like.

In the case where the average diameter of a filament material is measured using, for example, a digital caliper, the diameter is measured at 20 or more different points in the lengthwise direction of the filament material, and then the average value of the found values is obtained. The measuring points are preferably spaced apart from each other by 100 mm or more in the lengthwise direction of the resin composition having a thread-like shape. In the case where the resin composition has a thread-like shape, the resin composition may be, for example, circular or elliptic in cross-section. In the case where the cross-sectional shape of the resin composition is not circular, "diameter" refers to the length of the longest line segment that extends across the cross section.

There is no particular limitation on the method for producing a thermoplastic resin composition having a thread-like shape, and any known method can be used. For example, a method can be used in which the thermoplastic resin composition of the present invention is extruded using an extruder, cooled with water or air, and then wound on a winder. The filamentary resin composition of the present invention may or may not be drawn.

Examples of the method for adjusting the average diameter of the thermoplastic resin composition having a thread-like shape include appropriately selecting the feeding speed of the resin material into the extruder, the screw rotation speed of the extruder, the hole diameter of the die of the extruder, the winding speed of the winder, etc.

The thermoplastic resin composition having a thread-like shape can be obtained by shaping a resin material obtained by mixing component (A) and component (B) into a thread by a known method. Any of the additives listed above may be incorporated into the resin material as appropriate. The additive may be mixed in advance with the thermoplastic resin (A), or mixed with component (A) and component (B) when component (A) and component (B) are mixed, or mixed with a mixture of component (A) and component (B). The formulation of the resin material is the same as that of the thermoplastic resin composition described above, and thus all of the description for the formulation of the thermoplastic resin composition of the present invention given above can be applied to the resin material obtained by mixing component (A) and component (B).

A modeled body according to the present invention can be produced by a three-dimensional modeling apparatus from the thermoplastic resin composition of the present invention as a filament material. The modeling apparatus may be an FDM three-dimensional modeling apparatus (3D printer), and a commercially available apparatus can be used. The nozzle temperature of the modeling apparatus when producing the modeled body of the present invention by the FDM method is preferably 300°C or less. In the present invention, owing to use of a specific condensed phosphate ester compound, a wide range of thermoplastic resins (for example, commonly used general purpose plastics and engineering plastics) can be used in FDM three-dimensional modeling, even in the relatively low temperature range as described above. The present invention has excellent industrial applicability since the present invention thus enables three-dimensional modeling even in the relatively low temperature range as described above and produces a modeled object having excellent flame retardancy.

The modeled body of the present invention is excellent in flame retardancy, interlayer adhesion, and deposition modeling stability. Accordingly, the modeled body can be suitably used in various types of applications.

The modeled body of the present invention can be used in a wide range of industrial fields including the fields of electricity, electronics, and communication, agriculture, forestry and fisheries, mining, construction, food, fiber, clothing, medicine, coal, petroleum, rubber, leather, automobiles, railway, aviation, precision equipment, wood, construction material, civil engineering, furniture, printing, and musical instruments. More specific examples include office automation equipment such as a printer, a personal computer, a word processor, a keyboard, a PDA (personal digital assistant), a telephone, a copy machine, a facsimile, an ECR (electronic cash register), a desk calculator, an electronic notepad, a card, a holder, and stationary supplies, household appliances such as a washing machine, a refrigerator, a vacuum cleaner, a microwave oven, lighting equipment, a gaming console, a clothes iron, and *kotatsu* (a Japanese table with an electric heater), audio-visual equipment such as a TV set, a VTR, a video camera, a radio-cassette recorder, a tape recorder, a minidisk, a CD player, a loudspeaker, and a liquid crystal display, and electric and electronic parts and communication equipment such as a connector, a relay, a condenser, a switch, a printed circuit board, a coil bobbin, a semiconductor sealing material, an LED sealing material, an electric wire, a cable, a transformer, a deflecting yoke, a power distribution board, and a clock.

Furthermore, the modeled body of the present invention can also be used in various types of applications including materials for use in automobiles, vehicles, train cars, ships, aircrafts, buildings, houses and architecture such as seats (e.g., fillings and outer materials), belts, ceiling coverings, convertible tops, armrests, door trims, rear package trays, carpets, mats, sun visors, wheel covers, mattress covers, air bags, insulating materials, hand holding rings, hand holding straps, electric wire covering materials, electric insulating materials, paints, coating materials, upholstery materials, floor materials, partition walls, carpets, wallpaper, wall covering materials, exterior materials, interior materials, roofing materials, decking materials, wall materials, pillar materials, deckings, fence materials, frameworks, moldings, windows, door profiles, shingles, panels, terraces, balconies, noise insulation boards, heat insulation boards, and window materials; civil engineering materials; and houseware and sporting goods such as clothes, curtains, bed sheets, plywood boards, synthetic fiber boards, rugs, doormats, sheets, buckets, hoses, containers, glasses, bags, cases, goggles, ski plates, rackets, tents, and musical instruments.

### Examples

Hereinafter, the present invention will be described in further detail by way of examples. However, the present invention is not limited thereto.

### Examples 1 to 12 and Comparative Examples 1 to 9

### <Method for Producing Thermoplastic Resin Composition>

The components listed in Table 1 were mixed to obtain a thermoplastic resin composition, and the thermoplastic resin composition was melt kneaded using a single screw extruder (model name: D3038 available from Toyo Seiki Seisaku-sho, Ltd.) at an extrusion temperature of 250°C and a screw rotation speed of 25 rpm to produce a thermoplastic resin composition having a thread-like shape (hereinafter also referred to as "filament"). The filament discharged from the extruder was wound, while cooling the filament with water, using a filament winder (model name: Skein Winder, available from Nippon Placon Co., Ltd.) equipped with a measurement machine (model name: Filameasure, available from Filabot) such that the filament had an average diameter of 1.65 to 1.85 mm. In this way, a filament for fused deposition modeling was obtained. The average diameter of the thermoplastic resin composition having a thread-like shape was measured using a digital caliper by the method described above. The filament was wound on a filament reel, and then vacuum dried at 80°C. All of the contents shown in Tables 1 and 2 are in parts by mass.

### <Method for Making Specimen for Evaluation>

The reel on which the filament obtained above was wound was attached to a 3D printer (H+1 available from Afinia 3D) and used for FDM modeling under the following conditions to obtain a specimen with a size of 125 mm × 13 mm × 1.6 mm and another specimen with a size of 80 mm × 10 mm × 4 mm.
Nozzle temperature: 280°C
Stage temperature: 90°C
Deposition pitch: 0.2 mm
Filling rate: 99% or more (solid)
Raster orientation: 0°/90°
Deposition direction: X-Y (Flat)

### <Evaluation of Interlayer Adhesion>

Interlayer adhesion was evaluated in terms of adhesion between the resin extruded from the nozzle and the last deposited surface during deposition molding. The evaluation results were given on the following two-point scale.
A: The adhesion between the resin extruded from the nozzle and the last deposited surface was favorable, and a modeled body with the intended shape was obtained without a problem.
B: The adhesion between the resin extruded from the nozzle and the last deposited surface was weak, and the resin was thus separated from the last deposited surface during modeling to thereby fail to obtain a modeled body with the intended shape.

### <Evaluation of Deposition Modeling Stability>

Deposition modeling stability was evaluated in terms of the stability of the extrusion behavior of the resin from the nozzle during modeling. The evaluation results were given on the following three-point scale.
A: The extrusion speed of the resin was constant, and the thickness of the resin during deposition was stable without variations.
B: The extrusion speed of the resin was somewhat unstable, and small variations were found in the thickness of the resin during deposition; however, a modeled body with the intended shape was obtained.
C: The extrusion speed of the resin was unstable, and large variations were found in the thickness of the resin during deposition. The resin was not deposited in part to thereby fail to obtain a modeled body with the intended shape.

### < Evaluation of Flame Retardancy, 1: Extinguishment Time after Ignition>

The obtained specimen with a size of 125 mm × 13 mm × 1.6 mm was left in a constant temperature/humidity chamber at a temperature of 23°C and a humidity of 50%RH for two days. Next, the specimen was held vertically, and a burner flame was applied to the lower end of the specimen for 10 seconds. Then, the burner flame was removed, and a length of time taken for the flame applied to the specimen to extinguish (unit: second) was measured. The shorter the length of time, the higher the flame retardancy. The results are shown in Tables 1 and 2.

### < Evaluation of Flame Retardancy, 2: Oxygen Index>

The obtained specimen with a size of 80 mm × 10 mm × 4 mm was left in a constant temperature/humidity chamber at a temperature of 23°C and a humidity of 50%RH for two days. Then, the oxygen index of the specimen was measured in accordance with JIS K7201-2. The oxygen index refers to the minimum oxygen concentration required for the vertically held small specimen to maintain the combustion state in a mixed gas of nitrogen and oxygen. The higher the value of the oxygen index, the less flammable the material. The results are shown in Tables 1 and 2.

### < Method for Measuring Melting Point>

The melting point was measured using a thermogravimetry-differential thermal-analyzer (TG-DTA8122 available from Rigaku Corporation). A sample weighing 10 ± 0.5 mg was placed in an aluminum pan, and heated from 25°C to 450°C at a rate of 10°C/min. in the atmosphere. The top of the melting peak was taken as the "melting point".

Details of the components listed in Tables 1 and 2 are as follows.
Component (A) A-1: a polycarbonate resin (Iupilon S-3000F available from Mitsubishi Engineering Plastics Corporation)
Component (A) A-2: ABS resin (an acrylonitrile-butadiene-styrene copolymer, AT-05 available from Nippon A&L Inc.)
Component (B) B-1: a compound represented by the following formula (a mixture of compounds wherein r1 is 1 to 7; the mixture is liquid at ambient temperature (viscosity at 25°C: 28,000 mPa•s))

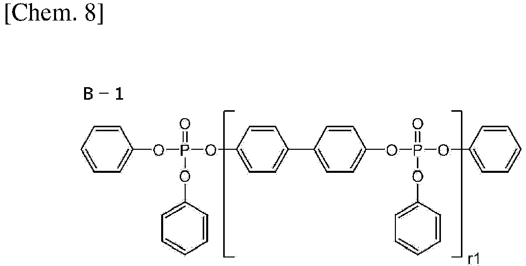

Component (B) B-2: a compound represented by the following formula (a mixture of compounds wherein r2 is 1 to 7; the mixture is liquid at ambient temperature (viscosity at 25°C: 19,000 mPa•s))

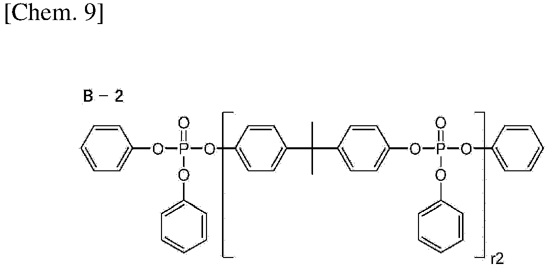

Component (B) B-3: a compound represented by the following formula (solid at ambient temperature; melting point 95°C)

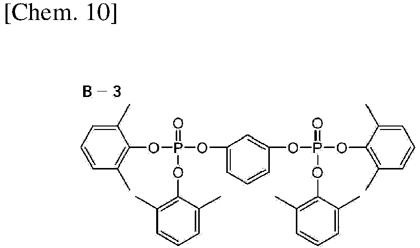

Comparative component BX-1 for component (B): a compound represented by the following formula (solid at ambient temperature; melting point 185°C)

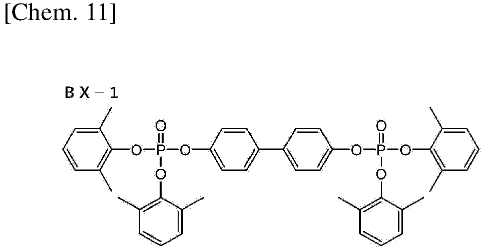

Comparative component BX-2 for component (B): triphenyl phosphate

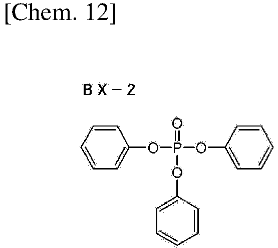

Component (C) C-1: polytetrafluoroethylene (POLYFLON MPAFA-500H available from Daikin Industries, Ltd.)

**Table 1**

| | Ex. 1 | Ex. 2 | Ex. 3 | Ex. 4 | Ex. 5 | Ex. 6 | Ex. 7 | Ex. 8 | Ex. 9 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|---|---|---|---|
| Component (A) A-1 | 72 | 70.4 | 68 | 65.6 | 60.8 | 56 | 70.4 | 68 | 68 | 80 | 48 | 72 | 68 | 72 | 68 |
| Component (A) A-2 | 18 | 17.6 | 17 | 16.4 | 15.2 | 14 | 17.6 | 17 | 17 | 20 | 12 | 18 | 17 | 18 | 17 |
| Component (B) B-1 | 10 | 12 | 15 | 18 | 24 | 30 | | | | | 40 | | | | |
| Component (B) B-2 | | | | | | | 12 | 15 | | | | | | | |
| Component (B) B-3 | | | | | | | | | 15 | | | | | | |
| Comparative component BX-1 for component (B) | | | | | | | | | | | | 10 | 15 | | |
| Comparative component BX-2 for component (B) | | | | | | | | | | | | | | 10 | 15 |
| Component (C) C-1 | 0.3 | 0.3 | 0.3 | 0.3 | 0.3 | 0.3 | 0.3 | 0.3 | 0.3 | 0.3 | 0.3 | 0.3 | 0.3 | 0.3 | 1.3 |
| | | | | | | | | | | | | | | | |
| Interlayer adhesion | A | A | A | A | A | A | A | A | A | A | B | B | B | B | B |
| Modeling stability | A | A | A | A | A | B | A | A | A | A | C | B | B | C | C |
| Flame retardancy 1: Extinguishment time after ignition (sec) | 7 | 4 | 0 | 0 | 0 | 0 | 5 | 2 | 2 | > 30 | 0 | 15 | 12 | 5 | 1 |
| Flame retardancy 2: Oxygen index (%) | 28 | 29 | 29 | 30 | 32 | 33 | 28 | 29 | 29 | 24 | 35 | 28 | 29 | 28 | 30 |

**Table 2]**

| | Ex. 10 | Ex. 11 | Ex. 12 | Com. Ex. 7 | Com. Ex. 8 | Com. Ex. 9 |
|---|---|---|---|---|---|---|
| Component (A) A-1 | 88 | 80 | 80 | 100 | 80 | 80 |
| Component (B) B-1 | 12 | 20 | | | | |
| Component (B) B-3 | | | 20 | | | |
| Comparative component BX-1 for component (B) | | | | | 20 | |
| Comparative component BX-2 for component (B) | | | | | | 20 |
| Component (C) C-1 | 0.3 | 0.3 | 0.3 | 0.3 | 0.3 | 0.3 |
| | | | | | | |
| Interlayer adhesion | A | A | A | A | B | B |
| Deposition modeling stability | A | A | A | A | B | C |
| Flame retardancy 1: Extinguishment time after ignition (sec) | 2 | 0 | 0 | > 30 | 0 | 0 |
| Flame retardancy 2: Oxygen index (%) | 34 | 35 | 35 | 27 | 35 | 36 |

As shown in Tables 1 to 2, it was found that the compositions of the present invention (Examples 1 to 12) produced favorable results in terms of interlayer adhesion, deposition modeling stability, and flame retardancy.

On the other hand, the compositions in which the content of component (B) was outside the range of the present invention (Comparative Examples 1, 2, and 7) produced poor results in terms of interlayer adhesion, deposition modeling stability, or flame retardancy. Also, the compositions including a condensed phosphate ester compound that is solid at ambient temperature and has a melting point outside of the range of the present invention (Comparative Examples 3, 4, and 8) produced poor results in terms of interlayer adhesion, and also produced poor results in terms of deposition modeling stability as compared with the corresponding compositions of Examples 1, 3, 11, and 12. Also, the compositions including a phosphate ester compound with a structure different from that of component (B) according to the present invention (Comparative Examples 5, 6, and 9) produced poor results in terms of interlayer adhesion and deposition modeling stability.

## Claims

1. A thermoplastic resin composition for fused deposition modeling, comprising:
(A) a thermoplastic resin; and
(B) a condensed phosphate ester compound represented by a general formula (1) given below, wherein the condensed phosphate ester compound has a melting point of 150°C or less or is liquid at ambient temperature,
wherein an amount of the condensed phosphate ester compound (B) contained is 1 to 35 parts by mass per 100 parts by mass of a total amount of the thermoplastic resin (A) and the condensed phosphate ester compound (B),
provided that when the resin composition contains a plurality of compounds represented by the general formula (1) in which R¹¹, R¹², R¹³, R¹⁴, and R¹⁵ are the same, but r is different, having a melting point of 150°C or less or being liquid at ambient temperature encompasses a case where a mixture of the plurality of compounds has a melting point of 150°C or less or is liquid at ambient temperature: 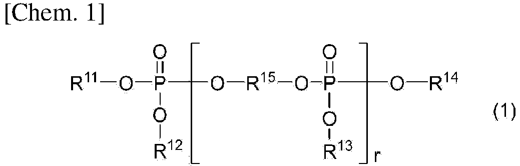
where R¹¹, R¹², R¹³, and R¹⁴ are the same or different, and each represent an alkyl group having 1 to 10 carbon atoms or an aromatic hydrocarbon group represented by a general formula (2) given below, R¹⁵ represents a divalent aromatic hydrocarbon group represented by a general formula (3) or (4) given below, and r represents a number from 1 to 30, 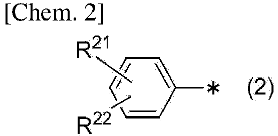
where R²¹ and R²² each independently represent a hydrogen atom, a hydroxy group, or an alkyl group having 1 to 10 carbon atoms, and an asterisk (*) represents a bonding site, and 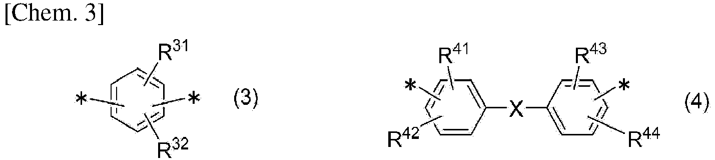
where R³¹, R³², R⁴¹, R⁴², R⁴³, and R⁴⁴ each independently represent a hydrogen atom, an alkyl group having 1 to 4 carbon atoms, an alkoxy group having 1 to 4 carbon atoms, a cycloalkyl group having 3 to 8 carbon atoms, an aryl group having 6 to 10 carbon atoms, a nitro group, a halogen atom, or a cyano group, X represents a direct bond, a divalent sulfur atom, a sulfonyl group, an alkylidene group having 1 to 5 carbon atoms, or an alkylene group having 1 to 5 carbon atoms, and an asterisk (*) represents a bonding site.

2. The thermoplastic resin composition according to claim 1, further comprising:
(C) one or more fluorine-containing polymers in an amount of 0.03 to 5 parts by mass per 100 parts by mass of the thermoplastic resin (A).

3. The thermoplastic resin composition according to claim 1 or 2,
wherein the thermoplastic resin composition has a thread-like shape.

4. The thermoplastic resin composition according to claim 3,
wherein the thermoplastic resin composition has a thread-like shape with an average diameter of 1.55 to 1.95 mm.

5. The thermoplastic resin composition according to any one of claims 1 to 4,
wherein the thermoplastic resin (A) contains one or more condensed polymer compounds.

6. The thermoplastic resin composition according to claim 5,
wherein the thermoplastic resin (A) contains a polycarbonate resin as the one or more condensed polymer compounds.

7. A method for producing a modeled object from the thermoplastic resin composition according to any one of claims 1 to 6 by a three-dimensional modeling apparatus.

8. The method according to claim 7,
wherein the three-dimensional modeling apparatus has a nozzle temperature of 300°C or less.

9. A modeled object obtained by the method according to claim 7 or 8.

10. Use of a resin material for producing a filament material for fused deposition modeling,
wherein the resin material comprises:
(A) a thermoplastic resin; and
(B) a condensed phosphate ester compound represented by a general formula (1) given below, wherein the condensed phosphate ester compound has a melting point of 150°C or less or is liquid at ambient temperature,
wherein a content of the condensed phosphate ester compound (B) is 1 to 35 parts by mass per 100 parts by mass of a total amount of the thermoplastic resin (A) and the condensed phosphate ester compound (B),
provided that when the resin composition contains a plurality of compounds represented by the general formula (1) in which R¹¹, R¹², R¹³, R¹⁴, and R¹⁵ are the same, but r is different, having a melting point of 150°C or less or being liquid at ambient temperature encompasses a case where a mixture of the plurality of compounds has a melting point of 150°C or less or is liquid at ambient temperature: 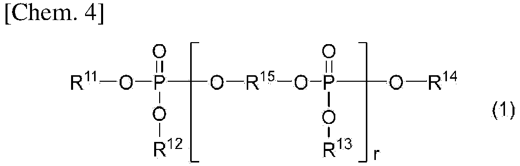
where R¹¹, R¹², R¹³, and R¹⁴ may be the same or different, and each represent an alkyl group having 1 to 10 carbon atoms or an aromatic hydrocarbon group represented by a general formula (2) given below, R¹⁵ represents a divalent aromatic hydrocarbon group represented by a general formula (3) or (4) given below, and r represents a number from 1 to 30, 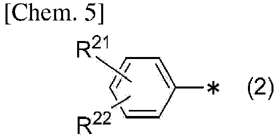
where R²¹ and R²² each independently represent a hydrogen atom, a hydroxy group, or an alkyl group having 1 to 10 carbon atoms, and an asterisk (*) represents a bonding site, and 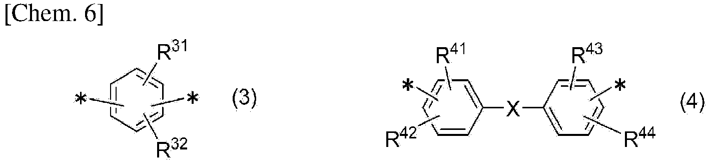
where R³¹, R³², R⁴¹, R⁴², R⁴³, and R⁴⁴ each independently represent a hydrogen atom, an alkyl group having 1 to 4 carbon atoms, an alkoxy group having 1 to 4 carbon atoms, a cycloalkyl group having 3 to 8 carbon atoms, an aryl group having 6 to 10 carbon atoms, a nitro group, a halogen atom, or a cyano group, X represents a direct bond, a divalent sulfur atom, a sulfonyl group, an alkylidene group having 1 to 5 carbon atoms, or an alkylene group having 1 to 5 carbon atoms, and an asterisk (*) represents a bonding site.
